# EUROPEAN PATENT APPLICATION

(11) **EP 4 804 273 A1**
(43) Date of publication of application: **09.09.2026**
(21) Application number: 24886149.4
(22) Date of filing: 25.10.2024
(51) Int. Cl.: H01M 10/0562, H01M 10/0585, H01M 10/052

(54) **SULFIDE-BASED SOLID ELECTROLYTE AND LITHIUM SECONDARY BATTERY COMPRISING SAME**

(30) Priority: 31.10.2023 KR 20230147624
(71) Applicant: SK On Co., Ltd., Seoul 03161 (KR)
(72) Inventor: AN, Woo Hyun, Daejeon 34124 (KR); PARK, Chan Hwi, Daejeon 34124 (KR); KO, Jeong Hyun, Daejeon 34124 (KR)
(74) Representative: Stolmár & Partner Patentanwälte PartG mbB
(86) International application number: PCT/KR2024/016383
(87) International publication number: WO 2025/095474

(57) **Abstract**

According to the present disclosure, there is provided a sulfide-based solid electrolyte including a Li-P-S-based compound having an anionic lattice structure represented by P_{1-b}M_{b}S₄₋ₐSeₐ³⁻.

## Description

### [Technical Field]

The present disclosure relates to a sulfide-based solid electrolyte and a lithium secondary battery including the same.

### [Background Art]

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickelcadmium battery, and a nickel-hydrogen battery. Among these, the lithium secondary battery has been actively researched and developed due to its high operating voltage, high energy density per unit weight, and advantages in charging speed and weight reduction.

The lithium secondary battery may include: an electrode assembly including a cathode, an anode, and a separation membrane (separator); and an electrolyte that impregnates the electrode assembly. The lithium secondary battery may further include, for example, a pouch-type outer case that accommodates the electrode assembly and the electrolyte.

In addition, there are all-solid-state batteries that use a solid electrolyte instead of a liquid electrolyte, and the all-solid-state batteries may include inorganic (sulfide-based and oxide-based) solid electrolytes and organic solid electrolytes (polymers). For example, the sulfide-based solid electrolyte has high ionic conductivity and moldability, and may include additional elements in addition to Li, P, and S, which are base elements, thereby improving ionic conductivity.

Since the all-solid-state batteries do not use flammable organic solvents, fire and explosion may be suppressed even if a short circuit occurs. Accordingly, the all-solid-state batteries may have improved safety compared to lithium-ion batteries that use liquid electrolytes.

### [Summary of Invention]

### [Problems to be Solved by Invention]

An object of the present disclosure is to provide a sulfide-based solid electrolyte having improved electrochemical properties.

Another object of the present disclosure is to provide a lithium secondary battery having improved electrochemical properties.

### [Means for Solving Problems]

A sulfide-based solid electrolyte according to the present disclosure includes a Li-P-S-based compound, wherein the Li-P-S-based compound includes an anionic lattice structure represented by Formula 1 below.

[Formula 1] P_{1-b}M_{b}S₄₋ₐSeₐ³⁻

In Formula 1, 0<a≤1.5 and 0<b<1, and M is at least one element selected from the group consisting of Si, Ge, Sn, and Al.

In exemplary embodiments, the P-Si peak area ratio of the Li-P-S-based compound, represented by Equation 1 below, may be 0.03 to 0.3.$P - Si peak area ratio = A / B$

In Equation 1, A denotes the integrated area of the Si 2p peak appearing at 98 eV to 105 eV in an XPS spectrum obtained by analyzing the Li-P-S-based compound by X-ray photoelectron spectroscopy (XPS), and B denotes the integrated area of the P 2p peak appearing at 130 eV to 135 eV.

In exemplary embodiments, the S-Si peak area ratio of the Li-P-S-based compound, represented by Equation 2 below, may be 0.009 to 0.06:$S - Si peak area ratio = A / C$

In Equation 2, A denotes the integrated area of the Si 2p peak appearing at 98 eV to 105 eV in the XPS spectrum obtained by analyzing the Li-P-S-based compound by X-ray photoelectron spectroscopy (XPS), and C denotes the integrated area of the S 2p peak appearing at 159 eV to 164 eV.

In exemplary embodiments, the P-Se peak area ratio of the Li-P-S-based compound, represented by Equation 3 below, may be 1 to 2:$P - Se Peak Area Ratio = D / B$

In Equation 3, B denotes the integrated area of the P 2p peak appearing at 130 eV to 135 eV in the XPS spectrum obtained by analyzing the Li-P-S-based compound by X-ray photoelectron spectroscopy (XPS), and D denotes the integrated area of the Se KLM peak appearing at 135 eV to 140 eV.

In exemplary embodiments, the anionic lattice structure may satisfy Equation 4 below.$0.3 \leq E / F \leq 0.95$

In Equation 4, E denotes the intensity of the peak appearing at 410 cm⁻¹ to 430 cm⁻¹ in the Raman spectrum obtained by analyzing the Li-P-S-based compound by Raman spectroscopy, and F denotes the intensity of the peak appearing at 410 cm⁻¹ to 430 cm⁻¹ in the Raman spectrum obtained by analyzing the compound represented by Li_{5.5}PS_{4.5}Cl_{1.5} by Raman spectroscopy.

In exemplary embodiments, 0.01≤a≤0.8 and 0.01≤b≤0.2.

In exemplary embodiments, the Li-P-S-based compound may be an argyrodite structure compound, a thio-LYSICON structure compound, a glass-ceramic structure compound, or a glass structure compound.

In exemplary embodiments, the lattice constant of the Li-P-S-based compound may be 9.86 Å to 10 Å.

In exemplary embodiments, the lithium ion conduction activation energy of the Li-P-S-based compound may be 0.15 eV to 0.3 eV.

In exemplary embodiments, the Li-P-S-based compound may be represented by Formula 2 below:

[Formula 2] Li_{6+b-c}P_{1-b}M_{b}S_{5-a-c}SeₐX_{1+c}

In Formula 2, 0<a≤1.5, 0<b<1, and 0<c≤1, X is at least one element selected from the group consisting of F, Cl, Br, and I, and M is at least one element selected from the group consisting of Si, Ge, Sn, and Al.

A lithium secondary battery according to the present disclosure includes: a cathode; and an electrolyte layer disposed on the cathode, wherein the electrolyte layer includes the sulfide-based solid electrolyte.

In exemplary embodiments, the lithium secondary battery may further include an anode disposed opposite the cathode, and the electrolyte layer may be disposed between the cathode and the anode.

In exemplary embodiments, the cathode or the anode may include the sulfide-based solid electrolyte.

### [Advantageous effects]

The sulfide-based solid electrolyte according to the present disclosure may exhibit improved ionic conductivity by including ion conduction paths having increased diameters and high stability. Accordingly, the mobility of lithium ions may be increased, and an electrolyte layer having improved high-rate charging and discharging characteristics may be realized.

The lithium secondary battery according to the present disclosure may have a shortened charging time and improved Coulomb efficiency by including the sulfide-based solid electrolyte.

### [Brief Description of Drawings]

FIGS. 1 to 8 are graphs illustrating XPS spectra of the Li-P-S-based compounds of Examples 1 to 4 and Comparative Examples 1 to 4.
FIGS. 9 and 10 are graphs illustrating Raman spectra of the Li-P-S-based compounds of Example 1 and Comparative Example 1.

### [Mode for Carrying out Invention]

A sulfide-based solid electrolyte according to the present disclosure includes a Li-P-S-based compound having an anionic lattice structure of P_{1-b}M_{b}S₄₋ₐSeₐ³⁻. In addition, a lithium secondary battery according to the present disclosure includes an electrolyte layer including the sulfide-based solid electrolyte.

Hereinafter, the present disclosure will be described in detail with reference to the accompanying drawings. However, the following description is merely illustrative, and the present disclosure is not limited to the specific embodiments described herein by way of example.

When the terms "above," "on," or "between" are used herein to describe that a component is "disposed," "positioned," or "interposed," this is intended to include not only cases where the component is directly disposed, but also cases where one or more other components are interposed therebetween.

According to exemplary embodiments, the sulfide-based solid electrolyte includes a Li-P-S-based compound. The Li-P-S-based compound includes an anionic lattice structure represented by Formula 1 below.

[Formula 1] P_{1-b}M_{b}S₄₋ₐSeₐ³⁻

In Formula 1, 0<a≤1.5 and 0<b<1, and M is at least one element selected from the group consisting of Si, Ge, Sn, and Al.

As used herein, the term "anionic lattice structure" may refer to a portion of a lattice structure corresponding to anions among the structures present in the compound. The anionic lattice structure may include a single lattice structure or may be a mixture of two or more types of lattice structures.

The solid electrolyte does not include a separate solvent, and lithium ions may migrate through ion conduction channels within the solid electrolyte without a medium such as a solvent. Accordingly, by securing the ion conduction channels within the solid electrolyte, the ionic conductivity of lithium ions may be increased, thereby realizing a battery having improved high-rate characteristics.

According to exemplary embodiments, M including Si, Ge, Sn, Al, etc. may be substituted at the P site of the Li-P-S-based compound, and Se may be substituted at the S site. M, such as Si, may have an ionic radius larger than that of the P atom, and Se may have an ionic radius larger than that of the S atom. Accordingly, the lattice spacing may increase, and the diameters of the ion conduction channels may increase. The Li-P-S-based compound may have ion conduction channels that allow lithium ions to migrate smoothly, thereby exhibiting improved lithium ion conductivity.

In exemplary embodiments, in Formula 1, a may be 0.01 or more and 1.5 or less, 0.01 to 1, 0.01 to 0.8, or 0.1 to 0.75. In addition, in Formula 1, b may be 0.01 or more and less than 1, 0.01 to 0.5, 0.01 to 0.2, or 0.05 to 0.15.

Within the above range, the lattice spacing of the Li-P-S-based compound may be increased sufficiently to secure lithium ion conduction channels, and the electrochemical stability of the solid electrolyte may be maintained during charging and discharging of the battery.

In Formula 1, if a exceeds 1.5, some Se atoms may fail to be incorporated into the lattice structure, thereby forming an impurity phase.

The Li-P-S-based compound may include a halogen element. The halogen element may include F, Cl, Br, I, or the like. For example, when the halogen element includes Cl or Br, both the electrochemical stability and lithium ion conductivity of the Li-P-S-based compound may be improved. For example, the halogen element may be substituted at the S site of the Li-P-S-based compound, and vacancies may be formed at the Li site. Accordingly, the crystal structure of the Li-P-S-based compound may be stabilized, and the lithium ion conductivity may be improved.

In exemplary embodiments, the Li-P-S-based compound may be represented by Formula 2 below.

[Formula 2] Li_{6+b-c}P_{1-b}M_{b}S_{5-a-c}SeₐX_{1+c}

In Formula 2, 0<a≤1.5, 0<b<1, and 0<c≤1.

In some embodiments, in Formula 2, 0.01≤a≤1.5, 0.01≤a≤1, 0.01≤a≤0.8, or 0.01≤a≤0.75.

In some embodiments, in Formula 2, 0.01≤b<1, 0.01≤b≤0.5, 0.01≤b≤0.2, or 0.05≤b≤0.15.

In some embodiments, in Formula 2, 0.01≤c≤1, 0.01≤c≤0.9, 0.1≤b≤0.8, or 0.2≤b≤0.7.

In Formula 2, X is a halogen element, which may be at least one selected from the group consisting of F, Cl, Br, and I.

In Formula 2, M may be at least one element selected from the group consisting of Si, Ge, Sn, and Al.

In exemplary embodiments, the Li-P-S-based compound may be an argyrodite structure compound, a thio-LYSICON (e.g., LGPS) compound, a glass-ceramic structure compound, or a glass structure compound. In some embodiments, the Li-P-S-based compound may be an argyrodite structure compound.

The argyrodite structure may refer to a crystal structure that is similar to or substantially identical to that of the ore Ag₈GeS₆. For example, the Li-P-S-based compound may have a cubic phase at low temperatures and an orthorhombic phase at high temperatures.

In exemplary embodiments, the lattice constant of the Li-P-S-based compound may be 9.86 Å to 10 Å. In some embodiments, the lattice constant of the Li-P-S-based compound may be 9.87 Å to 9.95 Å or 9.88 Å to 9.93 Å.

Within the above range, ion conduction channels through which lithium ions can migrate may be secured, thereby enhancing the straightness of lithium ion conduction paths. Accordingly, a battery having improved high-rate charging and discharging characteristics may be realized.

In exemplary embodiments, the P-Si peak area ratio of the Li-P-S-based compound, represented by Equation 1 below, may be 0.03 to 0.3.$P - Si peak area ratio = A / B$

In Equation 1, A denotes the integrated area of the Si 2p peak appearing at 98 eV to 105 eV in an XPS spectrum obtained by analyzing the Li-P-S-based compound by X-ray photoelectron spectroscopy (XPS), and B denotes the integrated area of the P 2p peak appearing at 130 eV to 135 eV.

Within the above P-Si peak area ratio range, an amount of P sites substituted with an M element may be appropriate, thereby improving the lithium ion conductivity and the electrochemical stability of the Li-P-S-based compound.

In exemplary embodiments, the S-Si peak area ratio of the Li-P-S-based compound, represented by Equation 2 below, may be 0.009 to 0.06.$S - Si peak area ratio = A / C$

In Equation 2, A denotes the integrated area of the Si 2p peak appearing at 98 eV to 105 eV in the XPS spectrum obtained by analyzing the Li-P-S-based compound by X-ray photoelectron spectroscopy (XPS), and C denotes the integrated area of the S 2p peak appearing at 159 eV to 164 eV.

Within the above S-Si peak area ratio range, an interaction between S and Si may be appropriate, thereby improving the crystal structural stability of the Li-P-S-based compound.

In exemplary embodiments, the P-Se peak area ratio of the Li-P-S-based compound, represented by Equation 3 below, may be 1 to 2.$P - Se Peak Area Ratio = D / B$

In Equation 3, B denotes the integrated area of the P 2p peak appearing at 130 eV to 135 eV in the XPS spectrum obtained by analyzing the Li-P-S-based compound by X-ray photoelectron spectroscopy (XPS), and D denotes the integrated area of the Se KLM peak appearing at 135 eV to 140 eV.

Generally, in an XPS analysis of the Li-P-S-based compound, the Se peak appears as Se 3d at 52 eV to 58 eV, but it overlaps with the Li 1s peak, making it difficult to distinguish it therefrom. In contrast, in the XPS spectrum of the Li-P-S-based compound of the present disclosure, a Se peak is observed in the range of approximately 135 eV to 140 eV. This appears to be due to electron emission from the inner shells (K, L, M electron shells) of Se atoms in this region, and the peak may be referred to as the Se KLM peak.

Within the above range, an amount of S sites substituted with Se may be appropriate, thereby improving the lithium ion conductivity and the electrochemical stability of the Li-P-S-based compound.

In exemplary embodiments, the XPS analysis may be performed by methods known in the art and is not particularly limited. For example, the XPS analysis may be performed using an Escalab 250Xi instrument (Thermo Fisher Scientific). When performing the analysis, it may be carried out under Al Kα source conditions (1486.68 eV, 900 µm beam size).

In exemplary embodiments, the anionic lattice structure in the Li-P-S-based compound may satisfy Equation 4 below. In some embodiments, the anionic lattice structure in the Li-P-S-based compound may satisfy Equation 5 below.$0.3 \leq E / F \leq 0.95$$0.5 \leq E / F \leq 0.9$

In Equation 4 and Equation 5, E denotes the intensity of the peak appearing at 410 cm⁻¹ to 430 cm⁻¹ in the Raman spectrum obtained by analyzing the Li-P-S-based compound by Raman spectroscopy, and F denotes the intensity of the peak appearing at 410 cm⁻¹ to 430 cm⁻¹ in the Raman spectrum obtained by analyzing the compound represented by Li_{5.5}PS_{4.5}Cl_{1.5} by Raman spectroscopy.

The peak appearing at 410 cm⁻¹ to 430 cm⁻¹ in the Raman spectrum obtained by analyzing the Li-P-S-based compound by Raman spectroscopy may be derived from the anionic lattice structure represented by Formula 1. The peak appearing at 410 cm⁻¹ to 430 cm⁻¹ in the Raman spectrum obtained by analyzing the compound represented by Li_{5.5}PS_{4.5}Cl_{1.5} by Raman spectroscopy may be derived from the PS₄³⁻ anionic lattice structure.

The intensity of the peak appearing at 410 cm⁻¹ to 430 cm⁻¹ in the Raman spectrum of the Li-P-S-based compound may be lower than the peak intensity observed at a similar position in the Raman spectrum of the reference compound represented by Li_{5.5}PS_{4.5}Cl_{1.5}, which is not substituted with M and Se.

Raman spectroscopy analysis may be performed using methods known in the art and is not particularly limited. For example, the Raman analysis may be performed using an inVia instrument (Renishaw plc). When performing the analysis, it may be carried out under a wavelength region of approximately 532 nm.

In some embodiments, the ionic conductivity of the Li-P-S-based compound may be 1 mS/cm or more, or 6 mS/cm to 10 mS/cm. Accordingly, the internal resistance of the battery may be reduced, and the capacity and output characteristics may be further improved.

The ionic conductivity may be measured by methods known in the art and is not particularly limited.

For example, the ionic conductivity may be measured using a VMP-300 instrument (Biologic). The measurement may be performed under AC impedance conditions of an amplitude of approximately 10 mV in a frequency range of 7 MHz to 100 mHz.

In exemplary embodiments, the lithium ion conduction activation energy of the Li-P-S-based compound may be 0.1 eV to 0.3 eV. In some embodiments, the lithium ion conduction activation energy of the Li-P-S-based compound may be 0.15 eV to 0.25 eV. Within this range, the activation energy for initiating lithium ion conduction may be low, and lithium ions may migrate more rapidly upon the application of an external power source. Accordingly, a battery having a fast charging speed may be realized.

The lithium ion conduction activation energy may be measured by methods known in the art and is not particularly limited. For example, the lithium ion conduction activation energy may be calculated by measuring the ionic conductivity as a function of temperature and using the Arrhenius relationship of Equation 6 below.$σ = A ⋅ exp \left(-Ea/kT\right)$

In Equation 6, σ denotes the ionic conductivity, A denotes the frequency factor, k denotes the Boltzmann constant, T denotes the absolute temperature, and Ea denotes the activation energy. In some embodiments, the sulfide-based solid electrolyte may further include other sulfide-based compounds in addition to the Li-P-S-based compound. For example, the sulfide-based solid electrolyte may further include a sulfide-based compound different from the Li-P-S-based compound, such as Li₂S-P₂S₅, Li₁₀GeP₂S₁₂, Li₁₀SnP₂S₁₂, Li_{9.54}Si_{1.74}P_{1.44}S_{11.7}Cl_{0.3}, Li₁₀(Si_{0.5}Ge_{0.5})P₂S₁₂, Li₁₀(Ge_{0.5}Sn_{0.5})P₂S₁₂, Li₁₀(Si_{0.5}Sn_{0.5})P₂S₁₂, Li₁₀GeP₂S_{11.7}O_{0.3}, Li_{9.6}P₃S₁₂, Li₉P₃S₉O₃, Li_{10.35}Ge_{1.35}P_{1.65}S₁₂, Li_{10.35}Si_{1.35}P_{1.65}S₁₂, Li_{9.81}Sn_{0.81}P_{2.19}S₁₂, Li_{9.42}Si_{1.02}P_{2.1}S_{9.96}O_{2.04}, Li₆PS₅Cl, or the like.

A lithium secondary battery according to the present disclosure includes: a cathode; and an electrolyte layer disposed on the cathode and including the sulfide-based solid electrolyte.

In some embodiments, the cathode may include a cathode current collector and a cathode active material layer disposed on the cathode current collector. For example, the cathode active material layer may include a cathode active material, a solid electrolyte, a binder, and/or a conductive material. For example, a cathode slurry may be prepared by mixing the cathode active material with the sulfide-based solid electrolyte, the conductive material, and/or the binder, followed by stirring, and the cathode may be fabricated by applying the cathode slurry onto the cathode current collector, and then drying and pressurizing.

The cathode current collector may include stainless steel, nickel, aluminum, titanium, copper, or an alloy thereof, and may specifically include aluminum or an aluminum alloy.

The cathode active material may include a compound represented by Formula 3 below.

[Formula 3] LiₓNi_{y}Me_{1-y}O₂

In Formula 3, 0.95≤x≤1.08 and 0.5≤y<1, and Me may be Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba, Zr, or a combination thereof.

In one embodiment, the cathode active material includes nickel (Ni) and may further include at least one of cobalt (Co) or manganese (Mn). For example, a nickel-cobalt-manganese (NCM)-based lithium oxide may be used as the cathode active material.

For example, nickel (Ni) may be provided as a metal associated with the capacity of the lithium secondary battery. The higher the content of nickel, the greater the improvement in capacity and output of the lithium secondary battery. However, if the content of nickel increases excessively, the cycle life of the lithium secondary battery may be reduced, and it may be disadvantageous in terms of mechanical and electrical stability.

In one embodiment, the conductivity or resistance of the lithium secondary battery may be improved by cobalt (Co), as well as the mechanical and electrical stability of the lithium secondary battery may be improved by manganese (Mn).

The chemical structure represented by Formula 3 indicates a bonding relationship among elements included in a layered structure or a crystal structure of the cathode active material, and does not exclude the presence of additional elements. For example, Me may include Co and/or Mn, and Co and Mn may be provided as main active elements of the cathode active material together with Ni. Formula 2 is provided to represent the bonding relationship among the main active elements and should be understood as encompassing the introduction or substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 3.

In one embodiment, the solid electrolyte included in the cathode may contain the above-described sulfide-based solid electrolyte.

The conductive material may be included to promote electron migration between the cathode active material particles. For example, the conductive material may include carbon-based conductive materials such as graphite, carbon black, graphene, or carbon nanotubes; and/or metal-based conductive materials such as tin, tin oxide, and titanium oxide; as well as perovskite materials such as LaSrCoO₃, and LaSrMnO₃.

In some embodiments, the cathode active material layer may further include a binder. For example, the binder may include a vinylidene fluoride-hexafluoropropylene copolymer (PVDF-co-HFP), polyvinylidene fluoride (PVDF), polyacrylonitrile, polymethyl methacrylate, nitrile butadiene rubber, or the like.

In some embodiments, the lithium secondary battery may include an anode disposed opposite the cathode, and the electrolyte layer may be disposed between the cathode and the anode. The anode may include an anode current collector, and in some embodiments, may include an anode current collector and an anode active material layer disposed on the anode current collector. For example, the anode active material layer may include an anode active material, a solid electrolyte, a binder, and/or a conductive material. For example, an anode slurry may be prepared by mixing an anode active material with a solid electrolyte, a conductive material and/or a binder, followed by stirring, and the anode may be fabricated by applying the anode slurry onto the anode current collector, and then drying and pressurizing.

The anode current collector may include gold, stainless steel, nickel, aluminum, titanium, copper, or an alloy thereof, and may specifically include copper or a copper alloy.

The anode active material may be a material capable of absorbing and desorbing lithium ions. For example, the anode active material may include carbon-based materials such as crystalline carbon, amorphous carbon, carbon composites, or carbon fibers; a lithium alloy; silicon or tin; or the like. Examples of the amorphous carbon may include hard carbon, coke, mesocarbon microbeads (MCMBs) calcined at 1500 °C or lower, mesophase pitch-based carbon fibers (MPCFs) or the like. Examples of the crystalline carbon include graphite carbons such as natural graphite, graphitized coke, graphitized MCMBs, and graphitized MPCFs. Elements contained in the lithium alloy may include aluminum, zinc, bismuth, cadmium, antimony, silicon, lead, tin, gallium, or indium.

The anode active material layer may further include an anode binder and/or an anode conductive material. The anode binder and conductive material may be substantially the same as or similar to the above-described cathode binder and conductive material. For example, the anode binder may be an aqueous binder such as styrene-butadiene rubber (SBR). In addition, the anode binder may be used together with a thickener such as carboxymethyl cellulose (CMC).

In one embodiment, the solid electrolyte contained in the anode may include the above-described sulfide-based solid electrolyte.

According to exemplary embodiments, an electrolyte layer is interposed between the cathode and the anode. The electrolyte layer includes the sulfide-based solid electrolyte and may further include a polymer electrolyte, an oxide-based solid electrolyte, or the like. For example, the lithium secondary battery may be provided as an all-solid-state battery.

In some embodiments, the oxide-based solid electrolyte may include an ion-conductive compound containing a metal oxide or oxygen. For example, examples of the oxide-based solid electrolyte may include metal oxides such as Al₂O₃, ZnO₂, Ce₂O₃, TiO₂, ZrO₂, HfO₂, MnO₂, MgO, WO_{2,} V₂O₅, etc., LLTO-based compounds, Li₆La₂CaTa₂O₁₂, Li₆La₂ANb₂O₁₂ (where A is Ca or Sr), Li₂Nd₃TeSbO₁₂, Li₃BO_{2.5}N_{0.5}, Li₉SiAlO₈, LAGP-based compounds, LATP-based compounds, Li₁₊ₓTi₂₋ₓAlₓSi_{y}(PO₄)_{3-y}(0≤x≤1, 0≤y≤1), LiAlₓZr₂₋ₓ(PO₄)₃(0≤x≤1, 0≤y≤1), LiTiₓZr₂₋ₓ(PO₄)₃ (wherein, 0≤x≤1, 0≤y≤1), LISICON-based compounds, LIPON-based compounds, perovskite-based compounds, NASICON-based compounds, and LLZO-based compounds.

In one embodiment, either the cathode or the anode may include lithium metal or a lithium alloy.

For example, when the cathode or anode is a lithium electrode, the solid electrolyte layer may decompose upon contact with lithium metal. In addition, when the secondary battery operates at a relatively high voltage, the decomposition and structural change of the solid electrolyte may be accelerated.

According to an embodiment, when the solid electrolyte layer includes the above-described sulfide-based solid electrolyte, the electrochemical stability of the solid electrolyte layer may be further enhanced. Therefore, even when operating at a high voltage or in contact with the lithium electrode, the internal structure of the solid electrolyte may remain stable, thereby improving the cycle life characteristics and stability of the secondary battery.

According to exemplary embodiments, an electrode cell may be defined by the cathode, the anode and the solid electrolyte layer, and a plurality of the electrode cells may be stacked to form an electrode assembly. For example, the electrode assembly may be formed by winding, stacking, folding, or the like.

The electrode assembly may be accommodated in a case to define a lithium secondary battery. The lithium secondary battery may be manufactured, for example, in a cylindrical, prismatic, pouch, or coin type using a can.

Electrode tabs (cathode tabs and anode tabs) may protrude from the cathode current collector and the anode current collector, respectively, and may extend to one side of the case of the secondary battery. The electrode tabs may be welded together with the one side of the case to form electrode leads (a cathode lead and an anode lead) that extend or are exposed to the outside of the case.

The above-described embodiments of the present disclosure include the following aspects and may be implemented through at least one of the following aspects.

A sulfide-based solid electrolyte according to a first aspect of the present disclosure includes a Li-P-S-based compound. The Li-P-S-based compound includes an anionic lattice structure represented by Formula 1 below.

[Formula 1] P_{1-b}M_{b}S₄₋ₐSeₐ³⁻

In Formula 1, 0<a≤1.5 and 0<b<1, and M is at least one element selected from the group consisting of Si, Ge, Sn, and Al.

In the first aspect, according to a second aspect, the P-Si peak area ratio of the Li-P-S-based compound represented by Equation 1 below may be 0.03 to 0.3.$P - Si peak area ratio = A / B$

In Equation 1, A denotes the integrated area of the Si 2p peak appearing at 98 eV to 105 eV in the XPS spectrum obtained by analyzing the Li-P-S-based compound by X-ray photoelectron spectroscopy (XPS), and B denotes the integrated area of the P 2p peak appearing at 130 eV to 135 eV.

In the first or second aspect, according to a third aspect, the S-Si peak area ratio of the Li-P-S-based compound, represented by Equation 2 below, may be 0.009 to 0.06.$S - Si peak area ratio = A / C$
(in Equation 2, A denotes the integrated area of the Si 2p peak appearing at 98 eV to 105 eV in the XPS spectrum obtained by analyzing the Li-P-S-based compound by X-ray photoelectron spectroscopy (XPS), and C denotes the integrated area of the S 2p peak appearing at 159 eV to 164 eV).

In any one of the first to third aspects, according to a fourth aspect, the P-Se peak area ratio of the Li-P-S-based compound, represented by Equation 3 below, may be 1 to 2.$P - Se peak area ratio = D / B$

In Equation 3, B denotes the integrated area of the P 2p peak appearing at 130 eV to 135 eV in the XPS spectrum obtained by analyzing the Li-P-S-based compound by X-ray photoelectron spectroscopy (XPS), and D denotes the integrated area of the Se KLM peak appearing at 135 eV to 140 eV.

In any one of the first to fourth aspects, according to a fifth aspect, the anionic lattice structure may satisfy Equation 4 below.$0.3 \leq E / F \leq 0.95$

In Equation 4, E denotes the intensity of the peak appearing at 410 cm⁻¹ to 430 cm⁻¹ in the Raman spectrum obtained by analyzing the Li-P-S-based compound by Raman spectroscopy, and F denotes the intensity of the peak appearing at 410 cm⁻¹ to 430 cm⁻¹ in the Raman spectrum obtained by analyzing the compound represented by Li_{5.5}PS_{4.5}Cl_{1.5} by Raman spectroscopy.

In any one of the first to fifth aspects, according to a sixth aspect, 0.01≤a≤0.8 and 0.01≤b≤0.2.

In any one of the first to sixth aspects, according to a seventh aspect, the Li-P-S-based compound may be an argyrodite structure compound, a thio-LYSICON structure compound, a glass-ceramic structure compound, or a glass structure compound.

In any one of the first to seventh aspects, according to an eighth aspect, the lattice constant of the Li-P-S-based compound may be 9.86 Å to 10 Å.

In any one of the first to eighth aspects, according to a ninth aspect, the lithium ion conduction activation energy of the Li-P-S-based compound may be 0.15 eV to 0.3 eV.

In any one of the first to ninth aspects, according to a tenth aspect, the Li-P-S-based compound may be represented by Formula 2 below.

[Formula 2] Li_{6+b-c}P_{1-b}M_{b}S_{5-a-c}SeₐX_{1+c}

In Formula 2, 0<a≤1.5, 0<b<1, and 0<c≤1, X is at least one element selected from the group consisting of F, Cl, Br, and I, and M is at least one element selected from the group consisting of Si, Ge, Sn, and Al.

A lithium secondary battery according to an eleventh aspect of the present disclosure includes a cathode; and an electrolyte layer disposed on the cathode, wherein the electrolyte layer includes the sulfide-based solid electrolyte according to any one of the first to tenth aspects.

In the eleventh aspect, according to a twelfth aspect, the lithium secondary battery includes an anode disposed opposite the cathode, and the electrolyte layer may be disposed between the cathode and the anode.

In the twelfth aspect, according to a thirteenth aspect, the cathode or the anode may include the sulfide-based solid electrolyte.

Hereinafter, embodiments of the present disclosure will be further described with reference to specific experimental examples. The examples and comparative examples included in the experimental examples are merely illustrative of the present disclosure and do not limit the scope of the appended claims. It will be apparent to those skilled in the art that various changes and modifications to the examples can be made within the scope and technical spirit of the present disclosure, and it is also understood that such changes and modifications fall within the scope of the appended claims.

### Example 1

### Preparation of Sulfide-based Solid Electrolyte and Electrolyte Layer

Li₂S, P₂S₅, LiCl, Li₂Se, and SiS₂ were introduced into a milling machine (P-6 model, Fritsch GmbH) in a molar ratio of 1.265:0.485:1.5:0.75:0.03, and milled for 10 hours at an energy of 24 to 30 G to prepare a mixture.

The mixture was then heat-treated at 550 °C for 6 hours under an argon atmosphere to prepare a Li-P-S-based compound having a composition of Li_{5.53}P_{0.97}Si_{0.03}S_{3.75}Se_{0.75}Cl_{1.5}.

### Manufacture of Lithium Secondary Battery

A secondary battery was manufactured using the Li-P-S-based compound prepared above. Specifically, a cathode slurry was prepared by mixing the Li-P-S-based compound, a cathode active material (NCM811), a binder (NBR), and a conductive material (Super P) in a mass ratio of 68:28:2:2, respectively.

A cathode was fabricated by uniformly coating the cathode slurry onto an aluminum foil (thickness: 15 µm), followed by drying.

The Li-P-S-based compound was placed in a circular SUS mold having a diameter of Φ13 and molded under a uniaxial pressure of 80 MPa using a cold isostatic press (CIP) to produce solid electrolyte pellets having a density of 10 mg/cm².

The cathode electrode was placed on one surface of the solid electrolyte pellets at 10 mg/cm² and pelletized by pressing at 350 MPa. Subsequently, an indium (In) foil was placed on the other surface and compressed at 50 MPa to manufacture an electrode cell having a structure of a cathode composite-solid electrolyte-In anode. The electrode cell was assembled inside a coin cell outer case having a diameter of Φ20.

### Examples 2 to 4 and Comparative Examples 1 to 4

Li-P-S-based compounds and lithium secondary batteries were manufactured in the same manner as in Example 1, except that the molar ratios of Li₂S, P₂S₅, LiCl, Li₂Se, and SiS² and the composition of the Li-P-S-based compounds were adjusted as shown in Table 1 below. For the composition, values corresponding to the a, b, and c values of Formula 2 were indicated in parentheses.

**[TABLE 1]**

| | Composition | Mixing molar ratio | | | | |
|---|---|---|---|---|---|---|
| | | Li₂S | P₂S₅ | LiCl | Li₂Se | SiS₂ |
| Example 1 | Li_{5.53}P_{0.97}Si_{0.03}S_{3.75}Se_{0.75}Cl_{1.5} (a=0.75, b=0.03, c=0.5) | 1.265 | 0.485 | 1.5 | 0.75 | 0.03 |
| Example 2 | Li_{5.56}P_{0.94}Si_{0.06}S_{3.75}Se_{0.75}Cl_{1.5} (a=0.75, b=0.06, c=0.5) | 1.28 | 0.47 | 1.5 | 0.75 | 0.06 |
| Example 3 | Li_{5.62}P_{0.88}Si_{0.12}S_{3.75}Se_{0.75}Cl_{1.5} (a=0.75, b=0.12, c=0.5) | 1.31 | 0.44 | 1.5 | 0.75 | 0.12 |
| Example 4 | Li_{5.53}P_{0.97}Si_{0.25}S_{3.75}Se_{0.75}Cl_{1.5} (a=0.75, b=0.25, c=0.5) | 1.375 | 0.375 | 1.5 | 0.75 | 0.25 |
| Comparative Example 1 | Li_{5.5}P₁S_{4.5}Cl_{1.5} (a=0, b=0, c=0.5) | 2 | 0.5 | 1.5 | 0 | 0 |
| Comparative Example 2 | Li_{5.56}P_{0.94}Si_{0.06}S_{4.5}Cl_{1.5} (a=0, b=0.06, c=0.5) | 2.03 | 0.47 | 1.5 | 0 | 0.06 |
| Comparative Example 3 | Li_{5.5}P₁S_{3.75} Se_{0.75}Cl_{1.5} (a=0.75, b=0, c=0.5) | 1.25 | 0.5 | 1.5 | 0.75 | 0 |
| Comparative Example 4 | Li_{5.5}P_{0.9}Si_{0.1}S_{2.5}Se₂Cl_{1.5} (a=2, b=0.1, c=0.5) | 0.05 | 0.45 | 1.5 | 2 | 0.1 |

### Experimental Example 1: Spectroscopic Analysis of the Li-P-S-based Compound

### (1) XPS Analysis

The Li-P-S-based compounds of the examples and comparative examples were analyzed using X-ray photoelectron spectroscopy (XPS). Specifically, the XPS analysis was performed on the Li-P-S-based compounds of the examples and comparative examples using an Escalab 250Xi instrument (Thermo Fisher Scientific) under A1 Kα source conditions (1486.68 eV, 900 µm beam size), and spectra were obtained for P, Si, S, and Se.

From the XPS spectra, the Si 2p peak appearing at 98 eV to 105 eV, the P 2p peak appearing at 130 eV to 135 eV, the Se KLM peak appearing at 135 eV to 140 eV, and the S 2p peak appearing at 159 eV to 164 eV were identified. The integrated area of each peak was calculated to determine the P-Si peak area ratio represented by Equation 1, the S-Si peak area ratio represented by Equation 2, and the P-Se peak area ratio represented by Equation 3, and the results are shown in Table 2 below.

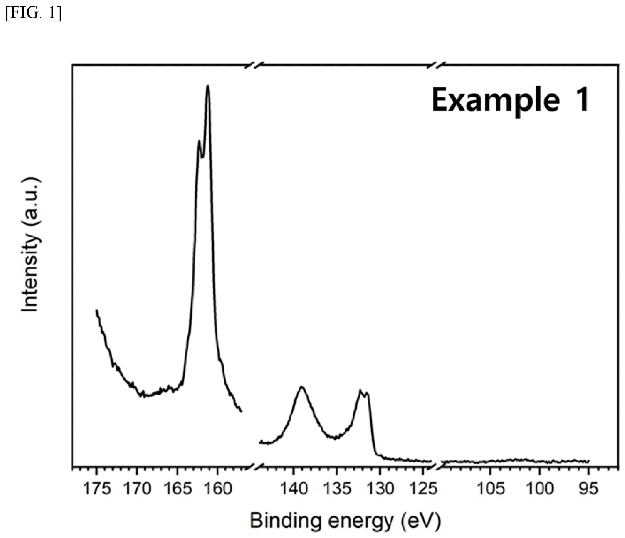

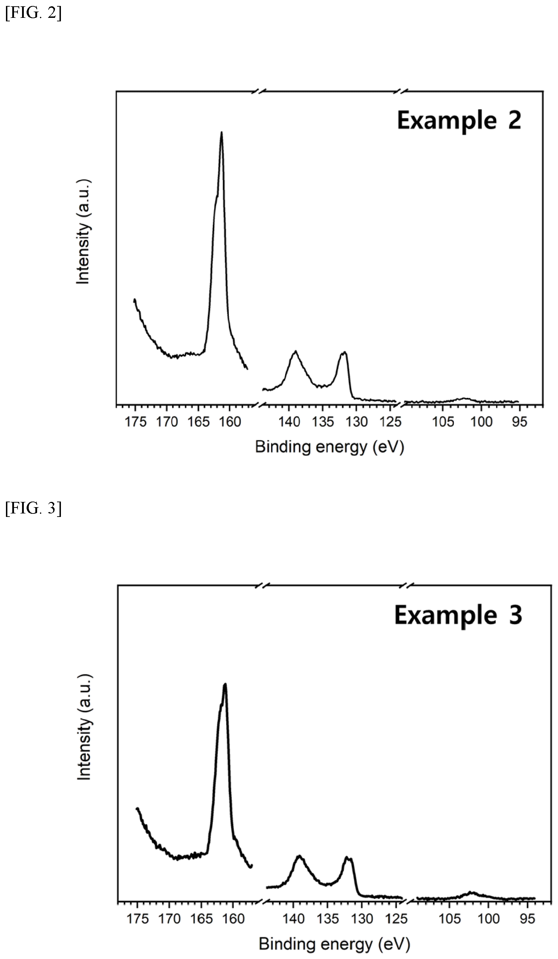

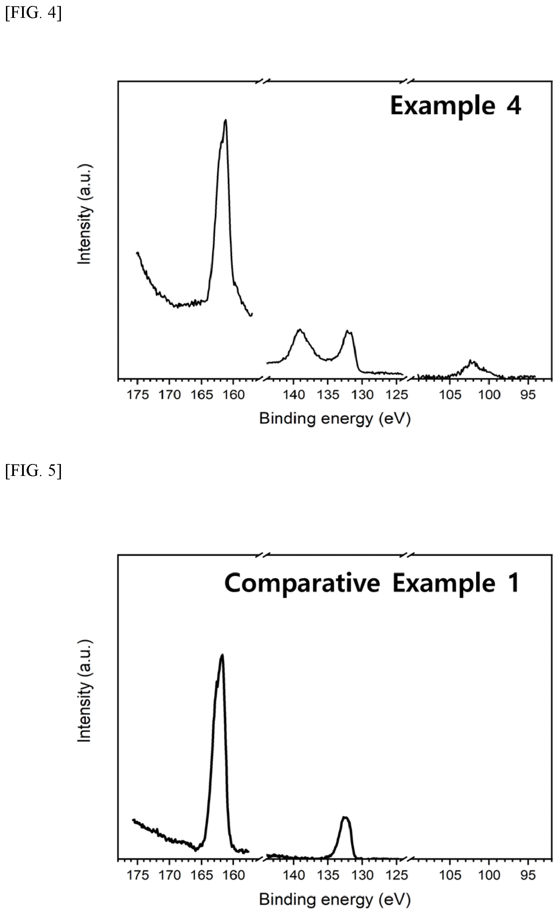

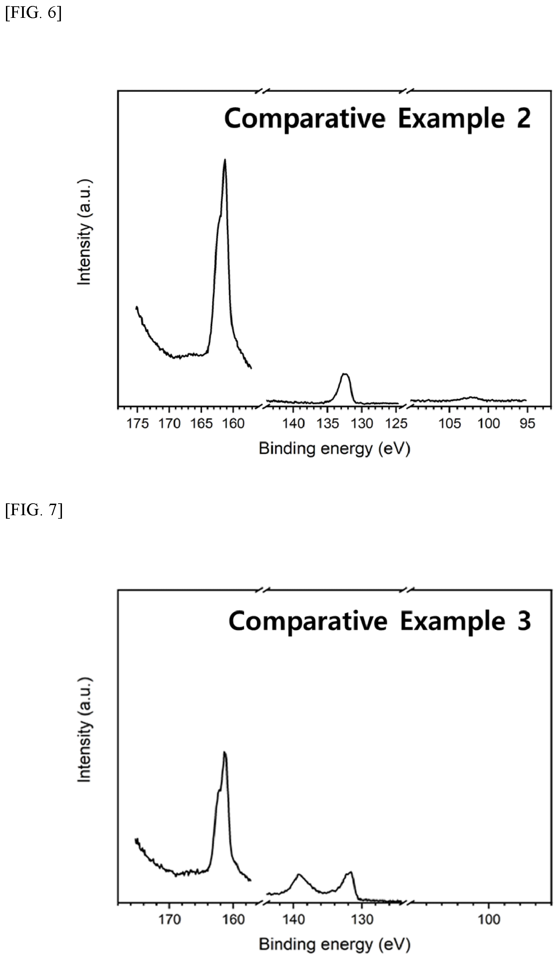

FIGS. 1 to 8 illustrate the XPS spectra of the Li-P-S-based compounds of Examples 1 to 4 and Comparative Examples 1 to 4, respectively.

### (2) Raman Analysis

The Li-P-S-based compounds of the examples and comparative examples were analyzed using Raman spectroscopy. Specifically, the Raman analysis was performed on the Li-P-S-based compounds of the examples and comparative examples using an inVia instrument (Renishaw plc) under a wavelength region of approximately 532 nm, and spectra were obtained.

Peaks were observed in the range of 410 cm⁻¹ to 430 cm⁻¹ in all Raman spectra. Accordingly, the peak intensities of the examples and comparative examples were calculated as ratios to the peak intensity of Comparative Example 1 and are shown in Table 2 below.

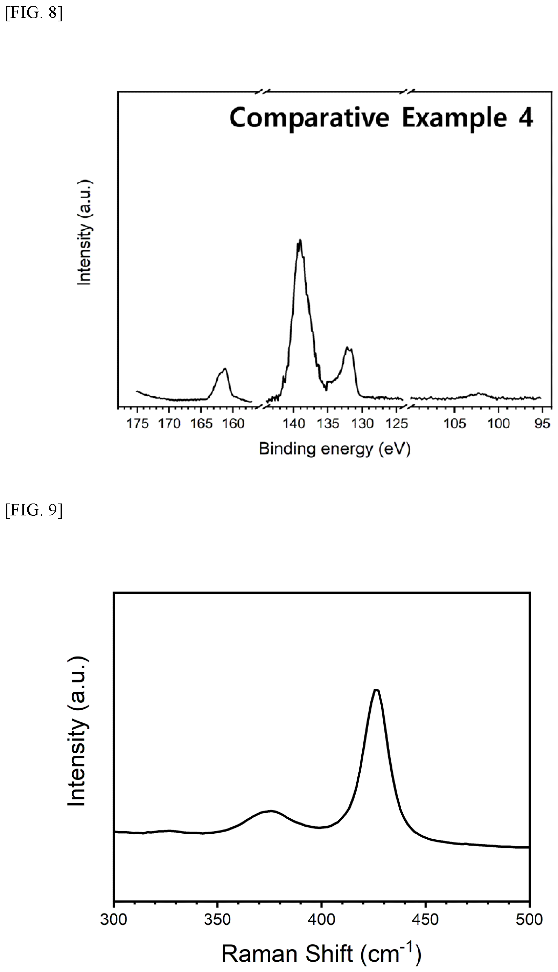

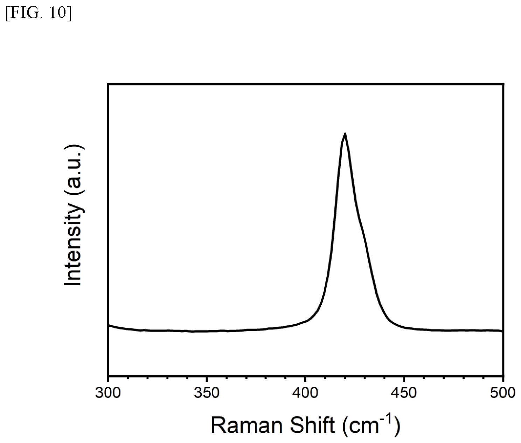

FIGS. 9 and 10 illustrate the Raman spectra of the Li-P-S-based compounds of Example 1 and Comparative Example 1, respectively.

### (3) Measurement of Ionic Conductivity

The ionic conductivity of the Li-P-S-based compounds used in the examples and comparative examples described above was measured using electrochemical impedance spectroscopy (EIS).

Specifically, solid electrolyte powders from the examples and comparative examples were placed in a circular PET mold having a diameter of Φ13, and the solid electrolyte powders were molded under a uniaxial pressure of 380 MPa using a cold isostatic press (CIP) to produce solid electrolyte pellets having a density of 100 mg/cm². The ionic conductivity was measured by applying an AC voltage to the solid electrolyte pellets using a VMP-300 instrument (Biologic), and the results are shown in Table 3 below. The measurements were performed under AC impedance conditions of an amplitude of approximately 10 mV in a frequency range of 7 MHz to 100 mHz.

### (4) Lithium Ion Conduction Activation Energy

For the Li-P-S-based compounds of the examples and comparative examples, the ionic conductivity as a function of temperature was measured in the same manner as in (3) above, and the lithium ion conduction activation energy was calculated using the Arrhenius relationship of Equation 6 described above. The calculated values are shown in Table 3 below.

**[TABLE 2]**

| | XPS Analysis | | | | | | | Raman |
|---|---|---|---|---|---|---|---|---|
| | Peak integrated area | | | | Equation 1 | Equation 2 | Equation 3 | Equation 4 |
| | S 2p | Se KLM | P 2p | Si 2p | | | | |
| Example 1 | 18336 | 6575 | 4603 | 178 | 0.0386 | 0.0097 | 1.43 | 0.59 |
| Example 2 | 15041 | 5713 | 3507 | 401 | 0.1143 | 0.0266 | 1.52 | 0.42 |
| Example 3 | 13427 | 4925 | 2835 | 739 | 0.2606 | 0.0551 | 1.67 | 0.31 |
| Example 4 | 8239 | 5015 | 2802 | 1025 | 0.3658 | 0.1244 | 1.79 | 0.21 |
| Comparative Example 1 | 10029 | - | 1952 | - | 0 | 0 | 0 | 1 |
| Comparative Example 2 | 15745 | - | 3386 | 398 | 0.1172 | 0.0252 | 0 | 0.36 |
| Comparative Example 3 | 8591 | 3131 | 2193 | - | 0 | 0 | 1.42 | 0.63 |
| Comparative Example 4 | 1105 | 19405 | 3256 | 425 | 0.1305 | 0.3845 | 5.96 | 0.11 |

**[TABLE 3]**

| | Lithium ion conduction activation energy (eV) | Ionic conductivity (mS/cm) |
|---|---|---|
| Example 1 | 0.20 | 8.11 |
| Example 2 | 0.15 | 9.52 |
| Example 3 | 0.19 | 8.25 |
| Example 4 | 0.24 | 6.88 |
| Comparative Example 1 | 0.28 | 5.54 |
| Comparative Example 2 | 0.27 | 5.89 |
| Comparative Example 3 | 0.26 | 6.45 |
| Comparative Example 4 | 0.42 | 0.8 |

Referring to Tables 2 and 3, the Li-P-S-based compounds of the examples included the anionic lattice structure represented by Formula 1 and exhibited a low lithium ion conduction activation energy, and accordingly, the ionic conductivity was improved compared to the comparative examples.

In particular, the Li-P-S-based compounds of Examples 1 to 3 had a P-Si peak area ratio, represented by Equation 1, of 0.03 to 0.3 and an S-Si peak area ratio, represented by Equation 2, of 0.009 to 0.06. In addition, compared to Comparative Example 1, the Li-P-S-based compounds of the examples showed a lower peak intensity observed within the range of 410 cm⁻¹ to 430 cm⁻¹ of the Raman spectrum, and the ionic conductivity was particularly improved due to the lower lithium ion conduction activation energy.

On the other hand, for the Li-P-S-based compounds of the comparative examples, a was 0 or b was 0 in Formula 1. Alternatively, the P-Si peak area ratio represented by Equation 1, or the S-Si peak area ratio represented by Equation 2 of the Li-P-S-based compounds of the comparative examples was too large, and accordingly, the ionic conductivity was lower than that of the Li-P-S-based compounds of the examples.

### Experimental Example 2: Evaluation of Battery Characteristics

### (1) Evaluation of High-rate Charging Characteristics

The coin cell manufactured above was subjected to charge and discharge at 0.1C for the initial 3 cycles at a temperature of 30 °C, with a cut-off charge of 4.3 V and a discharge of 2.5 V, and the discharge capacity (B1) in the first cycle was measured. Thereafter, 2 cycles of charge and discharge were performed at a rate of 0.2C, and 2 cycles of charge and discharge were performed at a rate of 0.5C. Thereafter, charge and discharge were performed at 1C, and the discharge capacity (B2) was measured.

The high-rate capacity characteristics were calculated according to Equation 7 below as a percentage of the discharge capacity (B2) at a high rate (1C) relative to the discharge capacity (B1) at a low rate (0.1C), and the results are shown in Table 4 below.$High - rate capacity characteristic \left(%\right) = B 2 / B 1 \times 100 %$

### (2) Evaluation of Coulomb Efficiency

The coin cell manufactured above was charged (CC-CV 0.1C, 4.3 V, 0.01C cut-off) and discharged (CC 0.1C, 2.5 V cut-off) at 30°C to measure the initial charge and discharge capacities. As shown in Equation 2 below, the initial efficiency was calculated according to Equation 8 below as a percentage of the initial discharge capacity (A2) relative to the initial charge capacity (A1), and the results are shown in Table 4 below.$Initial Efficiency \left(%\right) = A 2 / A 1 \times 100 %$

**[TABLE 4]**

| | High-rate capacity characteristics (%) | Initial Coulomb efficiency (%) |
|---|---|---|
| Example 1 | 68.1 | 81.6 |
| Example 2 | 73.4 | 82.8 |
| Example 3 | 68.4 | 81.7 |
| Example 4 | 67.4 | 80.9 |
| Comparative Example 1 | 60.7 | 77.5 |
| Comparative Example 2 | 62.7 | 78.1 |
| Comparative Example 3 | 65.9 | 80.5 |
| Comparative Example 4 | 41.0 | 70.8 |

Referring to Table 4, the lithium secondary batteries of the examples showed a high lithium ion mobility during fast charging, resulting in a small difference between the capacity during high-rate discharge and the capacity during low-rate discharge. In addition, the lithium secondary batteries of the examples exhibited high energy efficiency due to high Coulomb efficiency during initial charge and discharge.

On the other hand, the lithium secondary batteries of the comparative examples showed significantly lower capacity during high-rate discharge compared to the capacity during low-rate discharge, and Coulomb efficiency thereof also decreased.

The contents described above are merely examples of applying the principles of the present disclosure, and other configurations may be further included without departing from the scope of the present disclosure.

## Claims

1. A sulfide-based solid electrolyte comprising a Li-P-S-based compound, wherein the Li-P-S-based compound comprises an anionic lattice structure represented by Formula 1 below.
[Formula 1] P_{1-b}M_{b}S₄₋ₐSeₐ³⁻
(in Formula 1, 0<a≤1.5 and 0<b<1, and M is at least one element selected from the group consisting of Si, Ge, Sn, and Al).

2. The sulfide-based solid electrolyte according to claim 1, wherein the P-Si peak area ratio of the Li-P-S-based compound, represented by Equation 1 below, is 0.03 to 0.3: $P - Si peak area ratio = A / B$ (in Equation 1, A denotes the integrated area of the Si 2p peak appearing at 98 eV to 105 eV in an XPS spectrum obtained by analyzing the Li-P-S-based compound by X-ray photoelectron spectroscopy (XPS), and B denotes the integrated area of the P 2p peak appearing at 130 eV to 135 eV).

3. The sulfide-based solid electrolyte according to claim 1, wherein the S-Si peak area ratio of the Li-P-S-based compound, represented by Equation 2 below, is 0.009 to 0.06: $S - Si peak area ratio = A / C$ (in Equation 2, A denotes the integrated area of the Si 2p peak appearing at 98 eV to 105 eV in the XPS spectrum obtained by analyzing the Li-P-S-based compound by X-ray photoelectron spectroscopy (XPS), and C denotes the integrated area of the S 2p peak appearing at 159 eV to 164 eV).

4. The sulfide-based solid electrolyte according to claim 1, wherein the P-Se peak area ratio of the Li-P-S-based compound, represented by Equation 3 below, is 1 to 2: $P - Se peak area ratio = D / B$ (in Equation 3, B denotes the integrated area of the P 2p peak appearing at 130 eV to 135 eV in the XPS spectrum obtained by analyzing the Li-P-S-based compound by X-ray photoelectron spectroscopy (XPS), and D denotes the integrated area of the Se KLM peak appearing at 135 eV to 140 eV).

5. The sulfide-based solid electrolyte according to claim 1, wherein the anionic lattice structure satisfies Equation 4 below: $0.3 \leq E / F \leq 0.95$ (in Equation 4, E denotes the intensity of the peak appearing at 410 cm⁻¹ to 430 cm⁻¹ in the Raman spectrum obtained by analyzing the Li-P-S-based compound by Raman spectroscopy, and F denotes the intensity of the peak appearing at 410 cm⁻¹ to 430 cm⁻¹ in the Raman spectrum obtained by analyzing the compound represented by Li_{5.5}PS_{4.5}Cl_{1.5} by Raman spectroscopy).

6. The sulfide-based solid electrolyte according to claim 1, wherein 0.01≤a≤0.8 and 0.01≤b≤0.2.

7. The sulfide-based solid electrolyte according to claim 1, wherein the Li-P-S-based compound is an argyrodite structure compound, a thio-LYSICON structure compound, a glass-ceramic structure compound, or a glass structure compound.

8. The sulfide-based solid electrolyte according to claim 1, wherein the lattice constant of the Li-P-S-based compound is 9.86 Å to 10 Å.

9. The sulfide-based solid electrolyte according to claim 1, wherein the lithium ion conduction activation energy of the Li-P-S-based compound is 0.15 eV to 0.3 eV.

10. The Li-P-S-based sulfide-based solid electrolyte according to claim 1, wherein the Li-P-S-based compound is represented by Formula 2 below:
[Formula 2] Li6+b-cP1-bMbS5-a-cSeaX1+c
(in Formula 2, 0<a≤1.5, 0<b<1, and 0<c≤1,
X is at least one element selected from the group consisting of F, Cl, Br, and I, and
M is at least one element selected from the group consisting of Si, Ge, Sn, and Al).

11. A lithium secondary battery comprising:
a cathode; and
an electrolyte layer disposed on the cathode,
wherein the electrolyte layer comprises the sulfide-based solid electrolyte according to claim 1.

12. The lithium secondary battery according to claim 11, further comprising an anode disposed opposite the cathode, and wherein the electrolyte layer is disposed between the cathode and the anode.

13. The lithium secondary battery according to claim 12, wherein the cathode or the anode comprises the sulfide-based solid electrolyte.
